Europäisches Patentamt

**European Patent Office**

**Office européen des brevets**

(11) Veröffentlichungsnummer: **0 394 543**

**A1**

(12) **EUROPÄISCHE PATENTANMELDUNG**

(21) Anmeldenummer: **89108183.8**

(22) Anmeldetag: **05.05.89**

(51) Int. Cl.5: **B67D 5/01, B64F 1/28**

(30) Priorität: **26.04.89 DE 8905280 U**

(43) Veröffentlichungstag der Anmeldung:
**31.10.90 Patentblatt 90/44**

(84) Benannte Vertragsstaaten:
**AT BE CH DE ES FR GB GR IT LI LU NL SE**

�[71] Anmelder: **von Meyerinck, Wolfgang,
Dipl.-Ing.
Daubringer Strasse 43
D-6304 Lollar(DE)**

Anmelder: **von Meyerinck, Dietz**

Arnsburger Strasse 14
**D-6302 Lich 2(DE)**

(72) Erfinder: **von Meyerinck, Wolfgang, Dipl.-Ing.
Daubringer Strasse 43
D-6304 Lollar(DE)**
Erfinder: **von Meyerinck, Dietz
Arnsburger Strasse 14
D-6302 Lich 2(DE)**

(74) Vertreter: **Missling, Arne, Dipl.-Ing.
Patentanwalt Bismarckstrasse 43
D-6300 Giessen(DE)**

(54) **Doppel-Betankungsvorrichtung.**

(57) Die Erfindung betrifft eine Betankungsvorrichtung mit einer Hydrantenkupplung (1), zumindest einer Betankungskupplung (2) und mehreren, die Kupplungen (1, 2) verbindenden Rohrelementen, welche zur Ausbildung eines Hydrantenarms (6) und zweier Betankungsarme (3, 4) jeweils um nur einen Freiheitsgrad aufweisende Drehgelenke verschwenkbar miteinander verbunden sind. Um eine schnelle und gleichzeitige Betankung mehrerer Tankanschlüsse zu ermöglichen, ist auf einem Wagen (7) nachfolgend dem Hydrantenarm (6) ein Verteilerelement (5) angeordnet, an welchem mehrere Betankungsarme (3, 4) angeschlossen sind. Die Betankungsvorrichtung ist einfach zu bedienen, universell einsetzbar und gestattet die gleichzeitige Befüllung oder Entleerung mehrerer Tanks, beispielsweise Flugzeugtanks.

Fig. 1

Die Erfindung bezieht sich auf eine Betankungsvorrichtung mit einer Hydrantenkupplung 1, zumindest einer Betankungskupplung 2 und mehreren, die Kupplungen 1, 2 verbindenden Rohrelementen, welche jeweils über ein Drehgelenk mit nur einem Freiheitsgrad miteinander verbunden sind.

Betankungsvorrichtungen der beschriebenen Art dienen dazu, einen zu betankenden oder zu entleerenden Tank, insbesondere einen Flugzeugtank mit einer Kraftstoffversorgung, z.B. einer Hydrantenanlage zu verbinden.

Bedingt durch die leichte Beschädigung von Schläuchen und durch den hohen Wärmeausdehnungskoeffizienten insbesondere von Flugzeugtreibstoff sowie bedingt durch die Anforderungen hinsichtlich der Bedienungssicherheit und der Bedienbarkeit von derartigen Betankungsvorrichtungen scheidet die Verwendung von Schläuchen zum Betanken weitgehend aus. Aus diesem Grunde wurden Betankungsvorrichtungen geschaffen, welche aus mehreren Rohrelementen bestehen, die über Drehgelenke miteinander verbunden sind, welche jeweils nur einen Freiheitsgrad aufweisen. Es ist somit möglich, in sich gelenkige Betankungsrohre auszubilden, welche auf einfache Weise die Herstellung einer Verbindung zwischen einer Zuleitung und einem Tank ermöglichen. Derartige Betankungsvorrichtungen sind beispielsweise aus der EP-B1-166 799, der EP-A1-291 876 oder der EP-A1-166 800 bekannt.

Die vorbekannten Betankungsvorrichtungen sind jeweils so aufgebaut, daß der Anschluß eines Tanks an eine Zulaufleitung möglich ist, wobei die verschiedenen Drehgelenke eine Einstellung der Betankungsvorrichtung und eine Anpassung von deren Form auf die jeweiligen räumlichen Gegebenheiten ermöglichen. So ist die Betankungsvorrichtung beispielsweise längenvariabel oder in der Höhe einstellbar, um auch bei nicht exakter Positionierung eines Flugzeuges auf einem Vorfeld dieses möglichst einfach und schnell betanken zu können. Der Nachteil dieser bekannten Vorrichtungen liegt darin, daß diese hinsichtlich ihrer Ausgestaltung nicht sehr flexibel sind und insbesondere für jeden zu befüllenden oder zu entleerenden Tank eine separate Betankungsvorrichtung erforderlich ist. Dies führt dazu, daß insbesondere auf dem Vorfeld eines Flugplatzes zur gleichzeitigen Betankung mehrerer Tanks eines Flugzeuges eine Vielzahl separater Betankungsvorrichtungen verwendet werden muß. Dies führt zu einer erheblichen Erhöhung der Anzahl der Betankungsgeräte und der zur Bedienung benötigten Personen. Weiterhin stellen die mehreren Betankungsvorrichtungen für weitere Servicefahrzeuge, Wartungsmannschaften oder das Flugzeugpersonal eine Behinderung dar, da ein erheblicher Bereich des Vorfeldes durch die Betankungsvorrichtungen abgesperrt und damit zumindest nicht befahrbar ist. Auch im nichtbenötigten Zustand, d. h. nach Entfernen des Flugzeuges und nach Zusammenlegen der Betankungsvorrichtungen benötigen diese einen relativ großen Platz und sind zumeist auch nicht in einfacher Weise abtransportierbar, da die Betankungsvorrichtungen zumindest mit der jeweiligen Zulaufleitung für den Flugzeugkraftstoff verbunden bleiben.

Der Erfindung liegt die Aufgabe zugrunde, eine Betankungsvorrichtung der eingangs genannten Art zu schaffen, welche bei einfachem Aufbau und einfacher, betriebssicherer Handhabbarkeit eine schnellere Betankung eines Flugzeugs mit mehr als einem Tankanschluß ermöglicht, im nichtbenötigten Zustand schnell und einfach entfernbar ist.

Erfindungsgemäß wird die Aufgabe dadurch gelöst, daß zumindest zwei, an ihren Enden jeweils eine Betankungskupplung aufweisende, mehrere Rohrelemente umfassende Betankungsarme über ein Verteilerelement mit einem mit der Hydrantenkupplung verbundenen, aus mehreren Rohrelementen aufgebauten Hydrantenarm in Verbindung sind und daß die Betankungsarme und der Hydrantenarm auf einem verfahrbaren Wagen gelagert sind.

Die erfindungsgemäße Betankungsvorrichtung zeichnet sich durch eine Reihe erheblicher Vorteile aus. Da erfindungsgemäß über das Verteilerelement mehrere Betankungsarme angeschlossen sind, ist es möglich, gleichzeitig mehrere Tankanschlüsse eines Flugzeuges zu befüllen bzw. zu entleeren, wobei ein Anschluß der erfindungsgemäßen Betankungsvorrichtung über nur einen Hydrantenarm erfolgt, welcher an nur einen Hydranten anschließbar ist. Es ist damit z. B. möglich, die zur Be tankung von 2 Tanks erforderliche doppelte Durchflußmenge zu fördern und die erforderliche Zeit erheblich zu reduzieren, da nur eine einzige Betankungsvorrichtung für mehrere Tankanschlüsse erforderlich ist, während beim Stand der Technik bei starren Rohrleitungen für jeden Tankanschluß eine eigene Betankungsvorrichtung bedient werden muß. Der Zeitgewinn ist insbesondere beim Aufbau und beim Zusammenlegen der Betankungs vorrichtung erheblich. Weiterhin ist es unter Verwendung der erfindungsgemäßen Betankungsvorrichtung möglich, erhebliche personelle Einsparungen zu erzielen, da nur eine einzige Betankungsvorrichtung gehandhabt werden muß, welche zudem übersichtlich aufgebaut und platzsparend anzuordnen ist. Es ergeben sich somit für die Bedienungsperson nicht nur sehr kurze Wege, vielmehr vermindert sich die Anzahl der Bedienungsvorgänge ganz erheblich.

Ein weiterer, wesentlicher Vorteil der erfindungsgemäßen Betankungsvorrichtung besteht darin, daß diese insgesamt auf einem verfahrbaren Wagen gelagert ist und somit vollständig vom Vorfeld eines Flugplatzes entfernt werden kann. Weiterhin ist es mittels der erfindungsgemäßen Betankungsvorrichtung auch möglich, diese zur Betankung weiter entfernt abgestellter Flugzeuge, welche nicht direkt auf dem Vorfeld geparkt sind, zu verwenden, da der Wagen problemlos auf dem gesamten Flugplatzbereich verfahrbar ist. Da die erfindungsgemäße Hydrantenkupplung sowohl an einem im Boden angeordneten Hydranten als auch an einen Tankwagen angekuppelt werden kann, stellt die Betankungsvorrichtung auch auf weniger gut ausgerüsteten Flugplätzen, beispielsweise bei militärischen Einsätzen, eine schnelle Betankung des Flugzeuges sicher.

In günstiger Weise sind erfindungsgemäß zwei Betankungsarme vorgesehen, wobei das Verteilerelement in Form eines Y-förmigen Rohrstücks ausgebildet ist. Bei dieser Ausgestaltung ergeben sich keine Probleme hinsichtlich der Strömungsverhältnisse im Bereich des Verteilerelementes, weiterhin sind bei sehr vielen Flugzeugtypen zwei Tankanschlüsse vorgesehen, welche somit erfindungsgemäß gleichzeitig gefüllt werden können.

Weiterhin ist es besonders günstig, wenn auf dem Wagen zwischen dem Hydrantenarm und dem Verteilerelement weitere Installationselemente zwischengeschaltet sind. Diese können beispielsweise ein Betankungsventil, einen nachgeschalteten Mengenzähler und ein Venturirohr etc. umfassen. Weiterhin kann zwischen dem Venturirohr und dem Verteilerelement ein Druckausgleichselement angeschlossen sein. Es ist erfindungsgemäß jedoch auch möglich, jedem der Betankungsarme ein eigenes Betankungsventil und/oder einen separaten Mengenzähler zuzuordnen.

In einer besonders günstigen Ausgestaltung der Erfindung sind die Betankungsarme jeweils mittels eines fest am oberen Bereich des Wagens angeordneten Rohrstutzens gelagert. Diese Ausgestaltung ermöglicht es zum einen, bedingt durch die bereits vorgegebene Höhe des oberen Bereichs des Wagens die Betankungsarme in vertikaler Richtung einfacher auf die erforderliche Höhe einzustellen. Zum anderen wird insbesondere dann, wenn der Hydrantenarm am unteren Bereich des Wagens gelagert ist, ein sicherer Rücklauf und eine Entleerung der Betankungsarme sichergestellt, sobald diese von dem Flugzeugtank getrennt sind.

Vorteilhaft ist der Wagen mit einer begehbaren Plattform versehen, die das Anschließen der Betankungskupplung erleichtert. Die Plattform ist weiter vorteilhaft hebund senkbar ausgebildet, wobei dann die Betankungsarme über scherenförmig angeordnete Rohrstücke mit dem Treibstoffzufuhrsystem verbunden sind. Die Rohrstücke sind untereinander und mit dem Treibstoffzufuhrsystem mit den Betankungsarmen mittels Drehgelenke verbunden.

Weiterhin kann es sich als günstig erweisen, wenn der Hydrantenarm und/oder die Betankungsarme jeweils mit Gewichtsausgleichseinrichtungen versehen sind, welche die Bedienungsperson insbesondere bei Überwindung größerer Höhen entlasten und die auf die Tankanschlüsse einwirkenden Kräfte herabsetzen.

Im folgenden wird die Erfindung anhand eines Ausführungsbeispiels in Verbindung mit der Zeichnung beschrieben. Dabei zeigt:

Fig. 1 eine schematische Draufsicht auf ein Ausführungsbeispiel der erfindungsgemäßen Betankungsvorrichtung im zusammengelegten Zustand,

Fig. 2 eine Seitenansicht der in Fig. 1 gezeigten Anordnung, wobei einer der Betankungsarme in einen betriebsbereiten Zustand ausgefahren ist,

Fig. 3 und 4 eine weitere Ausführungsform der Erfindung in Drauf- und Seitenansicht und

Fig. 5 einen Schnitt nach Linie V-V in Fig. 4.

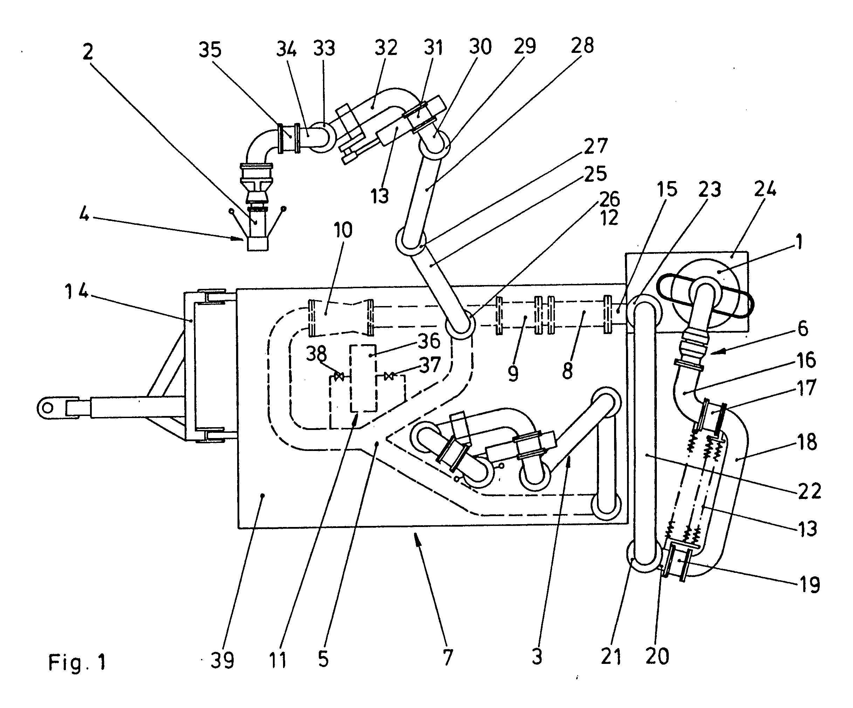

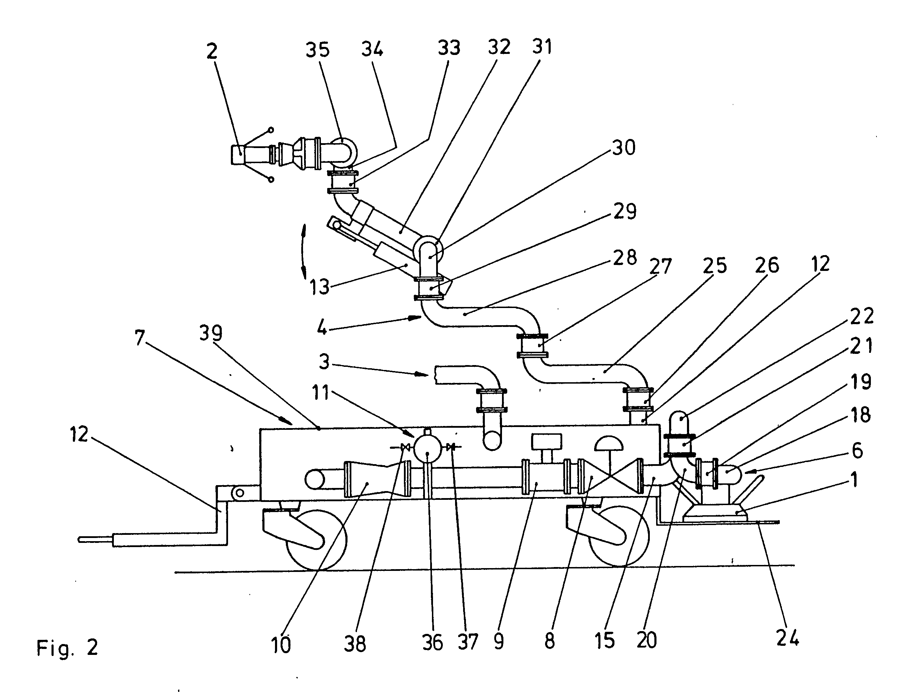

Die in den Fig. 1 und 2 gezeigte Betankungsvorrichtung umfaßt einen Wagen 7, welcher mit einer Anhängerkupp lung 14 versehen ist und beliebig verfahrbar ist. An der Oberseite des Wagens 7 sind bei dem gezeigten Ausführungsbeispiel zwei Rohrstutzen 12 gelagert, welche sich im wesentlichen in vertikaler Richtung erstrecken und an denen zwei Betankungsarme 3, 4 befestigt sind.

An der Rückseite des Wagens 7 ist ein Anschlußstutzen 15 vorgesehen, an welchem ein Hydrantenarm 6 gelagert ist, an dessen freiem Ende eine Hydrantenkupplung 1 angeschlossen ist.

Erfindungsgemäß sind sowohl der Hydrantenarm als auch die Betankungsarme 3, 4 jeweils aus mehreren Rohrelementen aufgebaut, welche über Drehgelenke miteinander verbunden sind, welche jeweils nur einen Freiheitsgrad aufweisen. Es ist somit möglich, durch entsprechendes Verschwenken der jeweiligen Rohrelemente die Betankungsarme und den Hydrantenarm platzsparend zusammenzulegen oder, wie in Zusammenhang mit dem Betankungsarm 4 in Fig. 2 gezeigt, zu einer maximalen Länge zu erstrekken, um die Hydrantenkupplung 1 des Hydrantenarms 6 an einer Kraftstoffzufuhr anzuschließen und um Betankungskupplungen 2 der Betankungsarme 3, 4 an dem jeweiligen Tankeinfüllstutzen, beispielsweise eines Flugzeuges, anzuschließen.

Erfindungsgemäß ist an dem Wagen 7 ein Verteilerelement 5 vorgesehen, welches bei dem gezeigten Ausführungsbeispiel Y-förmig ausgebildet ist und eine Aufteilung der über den Hydrantenarm 6 zugeführten Kraftstoffmenge auf die Betankungsarme 3, 4 dient. Weiterhin ist erfindungsgemäß stromab des Anschlußstutzens 15 an dem Wagen 7 ein Betankungsventil 8 sowie ein nachgeordneter Mengenzähler 9 vorgesehen. Diesem ist ein Venturirohr 10 nachgeordnet. Weiterhin ist an geeigneter Stelle ein Druckausgleichselement 11 vorgesehen. Diese Installationselemente sind mittels einer Plattform 39 geschützt im Innenraum des Wagens 7 angebracht. Diese Plattform ist begehbar und erleichtert das Anschließen der Betankungskupplung (2). Bei dem gezeigten Ausführungsbeispiel umfaßt der Hydrantenarm 6, wie bereits beschrieben, an seinem freien Ende eine Hydrantenkupplung 1, welche in üblicher Weise ausgebildet ist. Nachfolgend an die Hydrantenkupplung 1 ist ein Rohrstück 16 angeordnet, welches um 90° abgewinkelt ist und mit einem Gelenk 17 verbunden ist, welches um eine horizontale Achse verschwenkbar ist. An das Gelenk 17 schließt sich ein Rohrelement 18 an, dessen Enden jeweils, in einer Ebene liegend, um 90° abgewinkelt sind. Das andere Ende des Rohrelements 18 ist mit einem Gelenk 19 verbunden, welches ebenfalls eine Bewegung um eine horizontale Achse ermöglicht. Zwischen den Gelenken 17 und 19 ist eine Gewichtsausgleichseinrichtung 13 vorgesehen. Diese Gewichtsausgleichseinrichtung 13 greift einerseits am Rohrstück 20 und andererseits beiderseits an den Rohrstücken 16, 18 des Drehgelenkes 17 an. Hierdurch wird sowohl das Rohrstück 18 wie auch die Hydrantenkupplung 1 gewichtsentlastet. An das Gelenk 19 schließt sich ein Rohrstück 20 an, welches um 90° abgewinkelt ist und mit einem Gelenk 21 verbunden ist, welche eine Bewegung um eine vertikale Achse gestattet. Nachfolgend dem Gelenk 21 ist ein Rohrelement 22 vorgesehen, welches ähnlich dem Rohrelement 18 ausgebildet ist und dessen Endbereiche jeweils, in einer Ebene liegend, um 90° abgewinkelt sind. Das freie Ende des Rohrelements 22 ist mit einem Gelenk 23 verbunden, welches eine Verschwenkung um eine vertikale Achse ermöglicht. Es ist somit möglich, den Hydrantenarm 6 durch Verschwenken im wesentlichen geradlinig zu erstrekken, als auch in seiner Höhe zu verändern. Bei dem in den Fig. 1 und 2 gezeigten zusammengelegten Betriebszustand ruht die Hydrantenkupplung 1 auf einer am Wagen 7 befestigten Konsole 24 und bildet in jedem Fall den tiefsten Bereich der gesamten Betankungsvorrichtung, so daß der sich in den übrigen Rohrelementen befindliche Kraftstoff durch die Hydrantenkupplung ablaufen kann, um das gesamte Rohrsystem zu entleeren.

Die Betankungsarme 3, 4 sind jeweils im wesentlichen gleich ausgebildet und umfassen jeweils ein Rohrelement 25, welches in der Seitenansicht S-förmig ausgebildet ist, so daß seine Enden jeweils um 90°, in einer Ebene liegend, abgewinkelt, jedoch in unterschiedliche Richtungen weisend, ausgebildet sind. Das Rohrelement 25 ist jeweils an einem Gelenk 26 gelagert, welches eine Verbindung zu dem Rohrstutzen 12 darstellt und eine Verschwenkung um eine vertikale Achse ermöglicht. Das andere Ende des Rohrelements 25 ist mit einem um eine vertikale Achse verschiebbaren Gelenk 27 verbunden. An dieses schließt sich jeweils ein Rohrelement 28 an, welches gleich dem Rohrelement 25 ausgebildet ist. Diesem folgt ein um eine vertikale Achse verschwenkbares Gelenk 29. Diesem ist ein Rohrstück 30 nachgeordnet, welches um 90° abgewinkelt ist und welchem ein um eine horizontale Achse verschwenkbares Gelenk 31 folgt. Nachfolgend dem Gelenk 31 ist ein Rohrelement 32 angeordnet, dessen eines Ende, welches mit dem Gelenk 31 verbunden ist, rechtwinklig abgewinkelt ist und dessen anderes Ende ebenfalls abgewinkelt ist, jedoch nicht in der Ebene des einen Endes und des Mittelteils angeordnet ist. Das Rohrelement 32 wird mit einer Gewichtsausgleichseinrichtung 13, die am Rohrstück 30 und 32 befestigt ist, abgestützt und damit auch die Betankungskupplung 2. Nachfolgend ist ein um eine vertikale Achse verschwenkbares Gelenk 33 vorgesehen, welchem wiederum ein Rohrstück 34 folgt, welches um 90° abgewinkelt ist. Diesem folgt ein um eine horizontale Achse verschwenkbares Gelenk 35, an dessen anderem Ende die Betankungskupplung 2 angeordnet ist. Es ist somit möglich, die Betankungsarme 3, 4 jeweils um vertikale Achsen zu verschwenken, um diese oberhalb des Wagens 7 anzuordnen, weiterhin kann das freie Ende des Betankungsarms 3, 4 durch Verschwenken um das Gelenk 31 abgesenkt oder in der Höhe verändert werden.

Bei dem gezeigten Ausführungsbeispiel weisen der Hydrantenarm 6 und die nachgeordneten Rohrleitungen einen Querschnitt auf, welcher größer ist, als der der Betankungsarme 3, 4, so daß sich gleichmäßige Strömungsverhältnisse ausbilden.

Die Erfindung ist nicht auf das gezeigte Ausführungsbeispiel beschränkt, vielmehr ergeben sich für den Fachmann vielfältige Abwandlungs- und Modifikationsmöglichkeiten. Insbesondere ist es möglich, die Ausbildung der einzelnen Rohrelemente und der Gelenke zu variieren, um beispielsweise den Einstellbereich der Betankungsarme zu verändern.

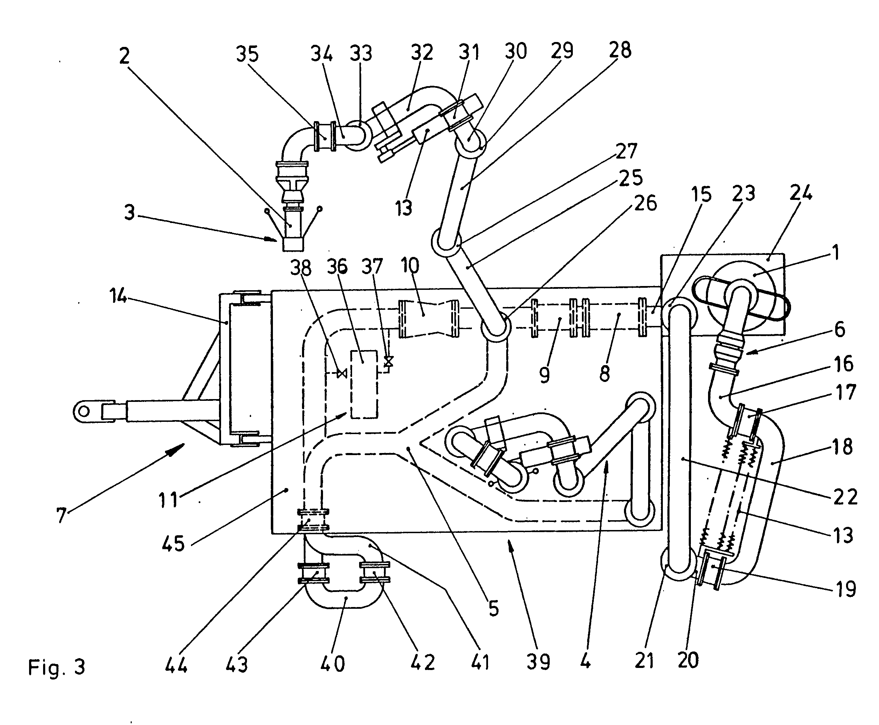

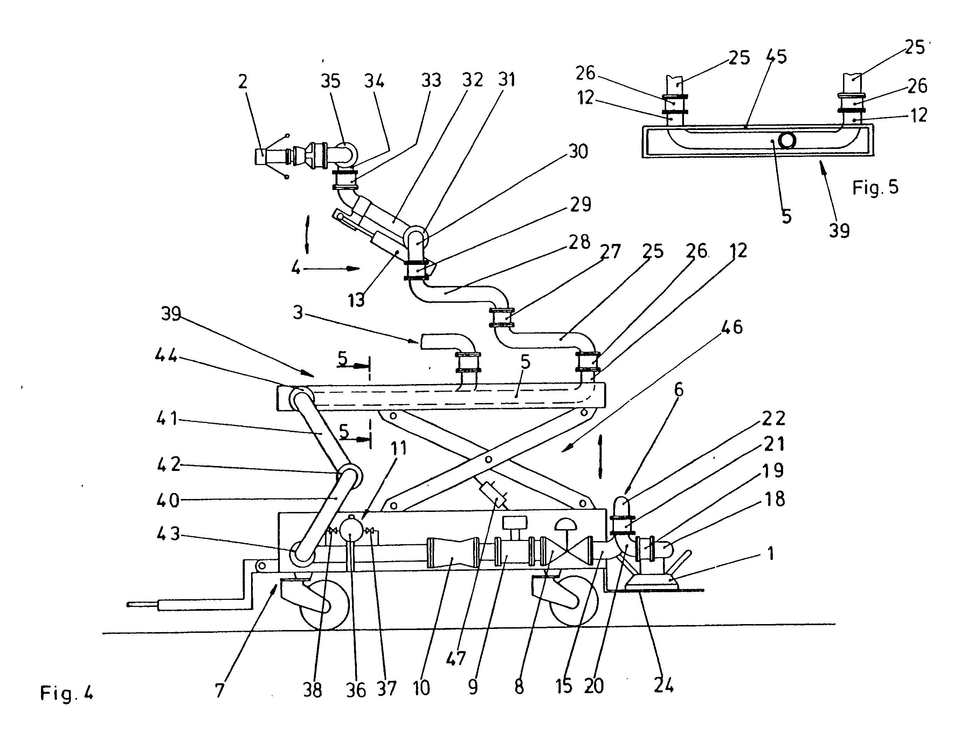

So ist es möglich, wie Fig. 3 bis 5 zeigen, die gesamten beiden Betankungsarme 3, 4, auf der Plattform anzuordnen, die mit einem Scherensystem am Wagen 7 befestigt ist, z.B. zwischen dem L-Stück 5 und nach dem Venturirohr 10, auszuheben, um auch größere Anschlußhöhen zu erreichen.

Wie aus den Figuren 3 bis 5 hervorgeht, unterscheidet sich diese Ausführung von der Ausführung nach Figur 1 und 2 dadurch, daß die Plattform 39 über ein Scherensystem 46, das über einen Hydraulikzylinder 47 betätigbar ist, angehoben und abgesenkt wird. Hierdurch wird die Arbeitshöhe bei sonst gleicher Ausbildung der Betankungsvorrichtung wesentlich vergrößert.

Zu diesem Zweck ist zwischen dem L-Stück 5 und dem Venturirohr 10 ein in Form einer Schere ausgebildetes Rohrleitungssystem eingeschaltet. Dieses Rohrleitungssystem besteht aus zwei Rohrleitungselementen 40, 41, die über ein horizontales Drehgelenk 42 miteinander verbunden sind. Die Rohrelemente 40, 41 sind mit ihren anderen Enden über gleichfalls horizontal liegende Drehgelenke 43, 44 mit dem Venturirohr 10 bzw. dem L-Stück 5 verbunden.

**Ansprüche**

1. Betankungsvorrichtung mit einer Hydrantenkupplung (1), zumindest einer Betankungskupplung (2) und mehreren, die Kupplungen (1, 2) verbindenden Rohrelementen, welche jeweils über ein Drehgelenk mit nur einem Freiheitsgrad miteinander verbunden sind, dadurch gekennzeichnet, daß zumindest zwei, an ihren Enden jeweils eine Betankungskupplung (2) aufweisende, mehrere Rohrelemente umfassende Betankungsarme (3, 4) über ein Verteilerelement (5) mit einem mit der Hydrantenkupplung (1) verbundenen, aus mehreren Rohrelementen aufgebauten Hydrantenarm (6) in Verbindung sind und daß die Betankungsarme (3, 4) und der Hydrantenarm (6) auf einem verfahrbaren Wagen (7) gelagert sind.

2. Betankungsvorrichtung nach Anspruch 1, dadurch gekennzeichnet, daß zwei Betankungsarme (3, 4) vorgesehen sind und daß das Verteilerelement (5) in Form eines Y-förmigen Rohrstücks ausgebildet ist.

3. Betankungsvorrichtung nach Anspruch 1 oder 2, dadurch gekennzeichnet, daß auf dem Wagen (7) zwischen dem Hydrantenarm (6) und dem Verteilerelement (5) weitere Installationselemente zwischengeschaltet sind.

4. Betankungsvorrichtung nach Anspruch 3, dadurch gekennzeichnet, daß die Installationselemente ein Betankungsventil (8), einen nachgeschalteten Mengenzähler (9) und ein Venturirohr (10) sowie Entleerungs-, Entlüftungs-, Druckmessungs- und Probenentnahmevorrichtungen umfassen.

5. Betankungsvorrichtung nach Anspruch 4, dadurch gekennzeichnet, daß das Betankungsventil (8) ein fremdenergiefreies Druck- und Mengenregelventil ist.

6. Betankungsvorrichtung nach einem der Ansprüche 3 bis 5, dadurch gekennzeichnet, daß zwischen dem Venturirohr (10) und dem Verteilerelement (5) ein Druckausgleichselement (11) angeschlossen ist.

7. Betankungsvorrichtung nach Anspruch 6, dadurch gekennzeichnet, daß das Druckausgleichselement (11) aus einem Druckausgleichsbehälter (36) besteht, der über ein membrangesteuertes, einstellbares Überdruck-Sicherheitsventil (37) und ein membrangesteuertes, Unterdruck-Sicherheitsventil (38) das Betankungssystem vor schädlichen Über- und Unterdrücken schützt.

8. Betankungsvorrichtung nach einem der Ansprüche 1 bis 7, dadurch gekennzeichnet, daß die Betankungsarme (3, 4) mittels jeweils eines fest am oberen Bereich des Wagens (7) angeordneten Rohrstutzens (12) gelagert sind.

9. Betankungsvorrichtung nach einem der Ansprüche 1 bis 8, dadurch gekennzeichnet, daß der Hydrantenarm (6) am unteren Bereich des Wagens (7) gelagert ist.

10. Betankungsvorrichtung nach einem der Ansprüche 1 bis 8, dadurch gekennzeichnet, daß der Hydrantenarm (6) und die Betankungsarme (3, 4) jeweils mit Gewichtsausgleichseinrichtungen (13) versehen sind.

11. Betankungsvorrichtung nach einem der Ansprüche 1 bis 10, dadurch gekennzeichnet, daß die Plattform (39) begehbar ist.

12. Betankungsvorrichtung nach einem der Ansprüche 1 bis 11, dadurch gekennzeichnet, daß die Plattform (39) einschließlich der auf ihr befestigten Betankungsarme (3, 4) anhebbar ist und daß zwischen Venturirohr (10) und dem Verteilerelement (5) Rohrelemente (40, 41) eingeschaltet sind, die über ein horizontal liegendes Drehgelenk (42) miteinander verbunden sind und über zwei gleichfalls horizontalliegende Drehgelenke (43, 44) am Venturirohr (10) bzw. am Verteilerelement (5) angeschlossen sind.

Fig. 1

Fig. 2

Fig. 3

Fig. 5

Fig. 4

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 066 098 (GALLO)<br>* Spalte 2, Zeilen 19-30 *<br>--- | 1 | B 67 D 5/01<br>B 64 F 1/28 |
| D,A | DE-A-3 734 010 (DORN)<br>* Figur 1 *<br>--- | 1 | |
| D,A | EP-A-0 291 876 (VON MEYERINCK)<br>* Zusammenfassung *<br>----- | 1 | |

| RECHERCHIERTE SACHGEBIETE (Int. Cl.5) |
|---|
| B 67 D<br>B 64 F |

Der vorliegende Recherchenbericht wurde für alle Patentansprüche erstellt

| Recherchenort | Abschlußdatum der Recherche | Prüfer |
|---|---|---|
| DEN HAAG | 06-07-1990 | HAUGLUSTAINE H.P.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.............................................................
& : Mitglied der gleichen Patentfamilie, übereinstimmendes Dokument

EPO FORM 1503 03.82 (P0403)